# EUROPEAN PATENT APPLICATION

(11) **EP 2 299 707 A1**
(43) Date of publication of application: **23.03.2011**
(21) Application number: 08874769.6
(22) Date of filing: 31.12.2008
(51) Int. Cl.: H04N 7/16, H04N 7/24, H04L 29/08

(54) **INTERACTIVE IPTV SYSTEM AND CONTENT PUSHING METHOD THEREOF**

(30) Priority: 24.06.2008 CN 200810126808
(71) Applicant: ZTE Corporation, Shenzhen, Guangdong 518057 (CN)
(72) Inventor: XIA, Hongfei, Guangdong 518057 (CN)
(74) Representative: Jansen, Cornelis Marinus
(86) International application number: PCT/CN2008/073908
(87) International publication number: WO 2009/155770

(57) **Abstract**

The present invention provides an interactive IPTV system and a content pushing method thereof. Wherein, the method includes the following steps: the IPTV Service Control Functions requests to transmit the media content in the IPTV Media Functions to the user equipment; the IPTV Media Functions transmits the media content to the user equipment; and the user equipment stores the media content into its own memory. With the technical solution of the invention, it implements the content pushing service in the Next Generation Network, and makes the user able to select the content stored in the user equipment directly to watch the TV program that the service provider recommends.

## Description

### Technical Field

The present invention relates to the communication field, in particular to an interactive IPTV system and a content pushing method thereof based on the Next Generation Network (NGN for short).

### Background of the Invention

At present, the framework structure of the next generation communication network has been basically determined. Apart from the management level, NGN further includes the user level, transmission level, service control level and application level, etc. The IP Multimedia Subsystem (IMS for short) is an aggregation of the main function entities on the service control level. By IMS, the registration, authorization, authentication of the user and the terminal equipment and Quality of Service (QoS for short) can be managed and ensured; meanwhile, IMS supports various user access technologies, supports the user nomadic and mobility management, supports interworking with the other traditional networks or the Next Generation Network, and supports integration of the services. IMS is based on the Session Initiation Protocol (SIP for short) and has been regarded as the main technique and system architecture of the Next Generation Network integration.

The interactive IPTV, also called Internet Protocol Television (IPTV for short), is a general name of the services such as living and on-demand TV program, and time-shift playing that are capable of supporting the interactive function provided by the IP bearer network to the user. The IPTV accesses the wideband network using the Asymmetrical Digital Subscriber Line (ADSL for short) or Ethernet through the telecommunication channel to transmit the TV signals with the internet protocol and takes the TV plus Set Top Box (STB for short) as the main terminal, to provide various types of digital media services that include the TV programs.

At present, the integration of NGN with IPTV is a hot topic of research. The current research and commercial situation are in the stage of the discussion of the internal architecture of the Next Generation Network of IMS and the entity flow of the on-demand, living and video recording functions.

However, during the realization of the present invention, the inventor found that the current content services can only be performed according to the initiative request of the user equipment, which will limit the operator to implement the services, and makes it hard for the operator to provide some new attractive services, thereby, it is unfavorable to improve the competitiveness of the IPTV system. No effective technical solution has been yet put forward regarding the problem that the content services can only be performed according to the initiative request of the user equipment so that it is inconvenient for the operator to implement the services in the related technology.

### Summary of the Invention

The objective of the present invention is to provide an interactive IPTV system based on the Next Generation Network and a content pushing method thereof to solve the problem that the content services can only be performed according to the initiative request of the user equipment so that it is inconvenient for the operator to implement the services.

According to one aspect of the present invention, provided is a content pushing method of an interactive IPTV system based on the Next Generation Network.

The content pushing method of an interactive IPTV system based on the Next Generation Network according to the present invention includes the following steps: the IPTV Service Control Functions requests to transmit the media content in the IPTV Media Functions to the user equipment; the IPTV Media Functions transmits the media content to the user equipment; and the user equipment stores the media content into its own memory.

Preferably, the IPTV Service Control Functions requesting to transmit the media content in the IPTV Media Functions to the user equipment specifically includes: the IPTV Service Control Functions sends the session initiation request carrying the request to the service control function entity according to the response message of the IPTV Media Functions; and the service control function entity forwards the session initiation request to the user equipment.

Preferably, the IPTV Service Control Functions sending the session initiation request carrying the request specifically includes: if the response message indicates absence of the content to be recommended, the method is ended; if the response message indicates presence of the content to be recommended, the IPTV Service Control Functions sends the session initiation request to the service control function entity, wherein, the address information of the recommended content and the identifier list of the user equipment are included; and the service control function entity forwards the session initiation request to the user equipment according to the identifier list of the user equipment.

Preferably, prior to the IPTV Service Control Functions sending the session initiation request carrying the request to the service control function entity, it is further included: the IPTV Service Control Functions selects the IPTV Media Functions according to the identifier information of the media content to be recommended to the user equipment and/or the location information of the user equipment; the IPTV Service Control Functions initiates the session initiation request to the selected IPTV Media Functions; and after the IPTV Service Control Functions initiating the session initiation request to the selected IPTV Media Functions, it is further included: the IPTV Media Functions sends the response message denoting that the session initiation request is received to the IPTV Service Control Functions.

Preferably, the IPTV Media Functions transmitting the media content to the user equipment specifically includes: the user equipment performs the judgment according the memory capability of its memory and/or the user's selection and/or whether the configuration in the user equipment accepts or not, and the judgment result is confirming to accept the media content; the IPTV Media Functions and the user equipment establish the content transmission signaling therebetween; the user equipment sends the session initiation response message approving to accept the media content to the service control function entity; the service control function entity delivers all the resource information reserved before the submission to the Resource and Admission Control Subsystem; the service control function entity sends the session initiation response message to the IPTV Service Control Functions; and the IPTV Media Functions transmits the media content to the user equipment using the reserved resource.

Preferably, the processing of the IPTV Media Functions and the user equipment establishing the content transmission signaling therebetween specifically can include: step ba: the service control function entity receives the media transmission request sent from the user equipment, the media transmission request including the establishment of the media content transmission signaling; step bb: the service control function entity and the Resource and Admission Control Subsystem perform the resource reservation therebetween; step bc: the service control function entity initiates the media transmission request to the IPTV Service Control Functions; step bd: the IPTV Service Control Functions sends the media transmission request to the IPTV Media Functions; step be: the IPTV Media Functions initiates the media transmission response to the IPTV Service Control Functions to return the information including the content transmission signaling result; step bf: the IPTV Service Control Functions sends the media transmission response to the service control function entity; and step bh: the service control function entity returns the media transmission response to the user equipment, and the content transmission signaling process is established.

Preferably, the following step can be further included between step bf and step bh: step bg: the service control function entity and the Resource and Admission Control Subsystem update the resource reservation therebetween.

Preferably, the processing of the IPTV Media Functions and the user equipment establishing the content transmission signaling therebetween specifically can include: step aa: the IPTV Service Control Functions receives the media transmission request sent from the IPTV Media Functions, the media transmission request including the establishment of the media content transmission signaling process; step ab: the IPTV Service Control Functions initiates the media transmission request to the service control function entity; step ac: the service control function entity and the Resource and Admission Control Subsystem perform the resource reservation therebetween; step ad: the service control function entity initiates the media transmission request to the user equipment; step af: the user equipment sends the media transmission response to the service control function entity; step ah: the service control function entity initiates the media transmission response to the IPTV Service Control Functions to return the information including the content transmission signaling process; and step ai: the IPTV Service Control Functions sends the media transmission response to the IPTV Media Functions, and the media content transmission signaling process is established.

Preferably, the processing of the IPTV Media Functions transmitting the media content to the user equipment specifically can include: the IPTV Media Functions and the user equipment establish the content transmission signaling therebetween; the user equipment sends the session initiation response message approving to accept the media content to the service control function entity; the service control function entity delivers all the resource information reserved before the submission to the Resource and Admission Control Subsystem; the service control function entity sends the session initiation response message to the IPTV Service Control Functions; and the IPTV Media Functions transmits the media content to the user equipment using the reserved resource.

Preferably, prior to the IPTV Media Functions transmitting the media content to the user equipment using the reserved resource, the method can further include: the IPTV Service Control Functions sends the session initiation response message to the IPTV Media Functions; after the IPTV Service Control Functions sending the session initiation response message to the IPTV Media Functions, the method further includes: the IPTV Media Functions sends the confirmation message that the IPTV Media Functions and the user equipment successfully establish the content transmission signaling therebetween to the IPTV Service Control Functions.

Preferably, the processing of the IPTV Media Functions and the user equipment establishing the content transmission signaling therebetween specifically can include: step aa: the IPTV Service Control Functions receives the media transmission request sent from the IPTV Media Functions, the media transmission request including the establishment of the media content transmission signaling process; step ab: the IPTV Service Control Functions initiates the media transmission request to the service control function entity; step ac: the service control function entity and the Resource and Admission Control Subsystem perform the resource reservation therebetween; step ad: the service control function entity initiates the media transmission request to the user equipment; step ae: the user equipment confirms to accept the media content according to the memory capacity of its memory and/or the user's selection; step af: the user equipment sends the media transmission response to the service control function entity; step ah: the service control function entity initiates the media transmission response to the IPTV Service Control Functions to return the information including the content transmission path; and step ai: the IPTV Service Control Functions sends the media transmission response to the IPTV Media Functions, and the media content transmission signaling process is established.

Preferably, the following step can be further included between step af and step ah: step ag: the service control function entity and the Resource and Admission Control Subsystem update the resource reservation therebetween.

Preferably, step ae: the user equipment performs the judgment according to the memory capacity of its memory and/or the user's selection and/or whether the configuration in the user equipment accepts or not, and the judgment result is refusing to accept the media content; step af: the user equipment sends the media transmission response carrying the rejection information to the service control function entity; step ag: the service control function entity and the Resource and Admission Control Subsystem cancel the resource reservation in step ac therebetween; step ah: the service control function entity initiates the media transmission response carrying the rejection information to the IPTV Service Control Functions; step ai: the IPTV Service Control Functions sends the media transmission response carrying the rejection information to the IPTV Media Functions; the IPTV Media Functions sends the confirmation message that the IPTV Media Functions and the user equipment fail to establish the content transmission signaling therebetween to the IPTV Service Control Functions; and the present content pushing method is ended.

Preferably, the IPTV Media Functions transmitting the media content to the user equipment specifically includes: the user equipment performs the judgment according to the memory capacity of its memory and/or the user's selection and/or whether the configuration in the user equipment accepts or not, and the judgment result is refusing to accept the media content; the user equipment sends the session initiation response message refusing to accept the media content to the service control function entity; the service control function entity sends the session initiation response message carrying the rejection information to the IPTV Service Control Functions; the IPTV Media Functions sends the confirmation information that the IPTV Media Functions and the user equipment fail to establish the content transmission signaling therebetween to the IPTV Service Control Functions; and the present content pushing method is ended.

Preferably, the user equipment determining whether to accept the media content according to the memory capacity of its memory and/or the user's selection confirmation and/or the configuration in the user equipment specifically includes: the user equipment confirms whether to accept the media content on the basis whether the size of the media content indicated by the session initiation request is smaller than the idle space of its own memory, and/or according to the user's decision, and/or determining whether to accept the media content according to the configuration in the user equipment.

Preferably, the IPTV Media Functions transmitting the media content to the user equipment using the reserved resource specifically includes: the IPTV Media Functions initiatively uploads the media content into the user equipment, or the user equipment downloads the media content from the IPTV Media Functions.

Preferably, after the user equipment storing the media content into its own memory, the method further includes: the user equipment selects the media content stored in the memory directly to play; or the user equipment and the Service Selection Functions interactively select the corresponding media content stored in the memory to play.

According to the other aspect of the present invention, further provided is an interactive IPTV system based on the Next Generation Network.

The interactive IPTV system based on the Next Generation Network according to the present invention comprises: IPTV Service Control Functions, configured to request to transmit the media content in the IPTV Media Functions to the user equipment; IPTV Media Functions, configured to transmit the media content to the user equipment; and user equipment, configured to store the media content into its own memory, to select the media content stored in the memory directly to play, or, to interactively select, with the Service Selection Functions, the corresponding media content stored in the memory to play.

With the technical solutions in the present invention, the IPTV Service Control Functions requests to transmit the media content in the IPTV Media Functions to the user equipment to be stored by the user equipment, the content pushing service (usually called Push Content on Demand or Push Video on Demand) is realized, i.e. the content in the content distribution network is pushed into the user equipment (usually the Set Top Box) in a real-time or non-realtime manner, therefore, the user can select the content stored in the user equipment directly to watch the TV program that the service provider recommends, which solves the problem that the content services can only be performed according to the initiative request of the user equipment so that it is inconvenient for the operator to implement the services in the related technology, and makes it convenient for the operator to flexibly provide diversified services to the user.

### Description of the Accompanying Drawings

The accompanying drawings herein constitute a part of the present application for further understanding the present invention. The illustrative embodiments of the present invention and the explanation thereof are used to illustrate the present invention, but do not unduly limit the present invention. In the drawings:
Figure 1 is a structure block diagram of the IPTV system based on the Next Generation Network according to the embodiments of the present invention;
Figure 2 is a flow chart of the content pushing method according to the embodiments of the present invention;
Figure 3 is a global message flow chart of the content pushing method according to embodiment 1 of the present invention;
Figure 4 is a message flow chart of the method that the user initiatively initiates the media request according to the preferred embodiment 1 of the present invention;
Figure 5 is a message flow chart of the method that the media function entity initiatively initiates the media request according to the preferred embodiment 1 of the present invention;
Figure 6 is a global message flow chart of the content pushing method according to embodiment 2 of the present invention; and
Figure 7 is a message flow chart of the method that the media function entity initiatively initiates the media request according to the preferred embodiment 2 of the present invention.

### Detailed Description of Exemplary Embodiments

### Function Summary

Regarding the problem that the content services can only be performed according to the initiative request of the user equipment so that it is inconvenient for the operator to implement the services in the related technology, in the present invention, the IPTV Service Control Functions requests to transmit the media content in IPTV Media Functions to the user equipment to be stored by the user equipment, a content pushing service (usually called Push Content on Demand or Push Video on Demand) is realized, i.e. the content in the content distribution network is pushed into the user equipment (usually the Set Top Box) in real-time or non-realtime manner, therefore, the user can select the content stored in the user equipment directly to watch the TV program that the service provider recommends, which makes it convenient for the operator to flexibly provide diversified services to the user.

The embodiments and features in the embodiments in the present application can be combined with each other if they are not conflicted.

The present invention will be described in detail with reference to the drawings in combination with the embodiments.

### Method Embodiments

According to the embodiments of the present invention, a content pushing method is provided.

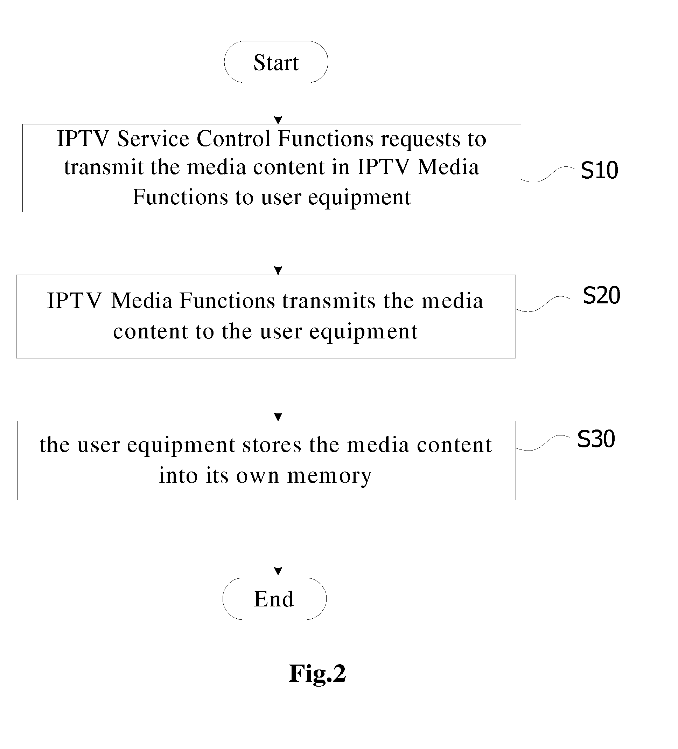

Figure 2 is a flow chart of the content pushing method according to the embodiments of the present invention. As shown in Figure 2, the following steps (step S10 to step S30) are included:

The specific processing as shown in Figure 2 is as follow:
Step S10, the IPTV Service Control Functions requests to transmit the media content in the IPTV Media Functions to the user equipment;
Step S20, the IPTV Media Functions transmits the media content to the user equipment; and
Step S30, the user equipment stores the media content into its own memory.

With the content pushing method of the apparatus according to the IPTV system based on the Next Generation Network in the present embodiment, the content pushing service is realized, i.e. the content in the IPTV media function (corresponding to the content distribution network in the actual implementation) is pushed into the user equipment (usually the Set Top Box) in a real-time or non-realtime manner, and the user selects the content stored in the user equipment directly to watch the TV program.

Wherein, the processing in step S10 specifically can include: the IPTV Service Control Functions sends the session initiation request carrying the request to the service control function entity according to the response message of the IPTV Media Functions; and the service control function entity forwards the session initiation request to the user equipment.

Moreover, the IPTV Service Control Functions sending the session initiation request carrying the request specifically includes: if the response message indicates absence of the content to be recommended, the method is ended; if the response message indicates presence of the content to be recommended, the IPTV Service Control Functions sends the session initiation request to the service control function entity, wherein, the address information of the recommended content and the identifier list of the user equipment are included; and the service control function entity forwards the session initiation request to the user equipment according to the identifier list of the user equipment.

Preferably, prior to the IPTV Service Control Functions sending the session initiation request carrying the request to the service control function entity, it is further included: the IPTV Service Control Functions selects the IPTV Media Functions according to the identifier information of the media content to be recommended to the user equipment and/or the location information of the user equipment; the IPTV Service Control Functions initiates the session initiation request to the selected IPTV Media Functions; and after the IPTV Service Control Functions initiating the session initiation request to the selected IPTV Media Functions, it is further included: the IPTV Media Functions sends the response message denoting that the session initiation request is received to the IPTV Service Control Functions.

In addition, step S20 specifically can include: the user equipment performs the judgment according the memory capability of its memory and/or the user's selection and/or whether the configuration in the user equipment accepts or not, and the judgment result is confirming to accept the media content; the IPTV Media Functions and the user equipment establish the content transmission signaling therebetween; the user equipment sends the session initiation response message approving to accept the media content to the service control function entity; the service control function entity delivers all the resource information reserved before the submission to the Resource and Admission Control Subsystem; the service control function entity sends the session initiation response message to the IPTV Service Control Functions; and the IPTV Media Functions transmits the media content to the user equipment using the reserved resource.

Further, the processing of the IPTV Media Functions and the user equipment establishing the content transmission signaling therebetween specifically can include: step ba: the service control function entity receives the media transmission request sent from the user equipment, the media transmission request including the establishment of the media content transmission signaling; step bb: the service control function entity and the Resource and Admission Control Subsystem perform the resource reservation therebetween; step bc: the service control function entity initiates the media transmission request to the IPTV Service Control Functions; step bd: the IPTV Service Control Functions sends the media transmission request to the IPTV Media Functions; step be: the IPTV Media Functions initiates the media transmission response to the IPTV Service Control Functions to return the information including the content transmission signaling result; step bf: the IPTV Service Control Functions sends the media transmission response to the service control function entity; and step bh: the service control function entity returns the media transmission response to the user equipment, and the content transmission signaling process is established.

Preferably, the following step can be further included between step bf and step bh: step bg: the service control function entity and the Resource and Admission Control Subsystem update the resource reservation therebetween.

In addition, the processing of the IPTV Media Functions and the user equipment establishing the content transmission signaling therebetween specifically can include: step aa: the IPTV Service Control Functions receives the media transmission request sent from the IPTV Media Functions, the media transmission request including the establishment of the media content transmission signaling process; step ab: the IPTV Service Control Functions initiates the media transmission request to the service control function entity; step ac: the service control function entity and the Resource and Admission Control Subsystem perform the resource reservation therebetween; step ad: the service control function entity initiates the media transmission request to the user equipment; step af: the user equipment sends the media transmission response to the service control function entity; step ah: the service control function entity initiates the media transmission response to the IPTV Service Control Functions to return the information including the content transmission signaling process; and step ai: the IPTV Service Control Functions sends the media transmission response to the IPTV Media Functions, and the media content transmission signaling process is established.

Further, the processing in step S20 specifically can include: the IPTV Media Functions and the user equipment establish the content transmission signaling therebetween; the user equipment sends the session initiation response message approving to accept the media content to the service control function entity; the service control function entity delivers all the resource information reserved before the submission to the Resource and Admission Control Subsystem; the service control function entity sends the session initiation response message to the IPTV Service Control Functions; and the IPTV Media Functions transmits the media content to the user equipment using the reserved resource.

In addition, prior to the IPTV Media Functions transmitting the media content to the user equipment using the reserved resource, the method can further include: the IPTV Service Control Functions sends the session initiation response message to the IPTV Media Functions; after the IPTV Service Control Functions sending the session initiation response message to the IPTV Media Functions, the method further includes: the IPTV Media Functions sends the confirmation message that the IPTV Media Functions and the user equipment successfully establish the content transmission signaling therebetween to the IPTV Service Control Functions.

Further, the IPTV Media Functions and the user equipment establishing the content transmission signaling therebetween specifically can include: step aa: the IPTV Service Control Functions receives the media transmission request sent from the IPTV Media Functions, the media transmission request including the establishment of the media content transmission signaling process; step ab: the IPTV Service Control Functions initiates the media transmission request to the service control function entity; step ac: the service control function entity and the Resource and Admission Control Subsystem perform the resource reservation therebetween; step ad: the service control function entity initiates the media transmission request to the user equipment; step ae: the user equipment confirms to accept the media content according to the memory capacity of its memory and/or the user's selection; step af: the user equipment sends the media transmission response to the service control function entity; step ah: the service control function entity initiates the media transmission response to the IPTV Service Control Functions to return the information including the content transmission path; and step ai: the IPTV Service Control Functions sends the media transmission response to the IPTV Media Functions, and the media content transmission signaling process is established.

Preferably, the following step is further included between step af and step ah: step ag: the service control function entity and the Resource and Admission Control Subsystem update the resource reservation therebetween.

Preferably, step ae: the user equipment performs the judgment according to the memory capacity of its memory and/or the user's selection and/or whether the configuration in the user equipment accepts or not, and the judgment result is refusing to accept the media content; step af: the user equipment sends the media transmission response carrying the rejection information to the service control function entity; step ag: the service control function entity and the Resource and Admission Control Subsystem cancel the resource reservation in step ac therebetween; step ah: the service control function entity initiates the media transmission response carrying the rejection information to the IPTV Service Control Functions; step ai: the IPTV Service Control Functions sends the media transmission response carrying the rejection information to the IPTV Media Functions; the IPTV Media Functions sends the confirmation message that the IPTV Media Functions and the user equipment fail to establish the content transmission signaling therebetween to the IPTV Service Control Functions; and the present content pushing method is ended.

Preferably, step S20 can further specifically include: the user equipment performs the judgment according to the memory capacity of its memory and/or the user's selection and/or whether the configuration in the user equipment accepts or not, and the judgment result is refusing to accept the media content; the user equipment sends the session initiation response message refusing to accept the media content to the service control function entity; the service control function entity sends the session initiation response message carrying the rejection information to the IPTV Service Control Functions; the IPTV Media Functions sends the confirmation information that the IPTV Media Functions and the user equipment fail to establish the content transmission signaling therebetween to the IPTV Service Control Functions; and the present content pushing method is ended.

Preferably, the user equipment determining whether to accept the media content according to the memory capacity of its memory and/or the user's selection confirmation and/or the configuration in the user equipment specifically includes: the user equipment confirms whether to accept the media content on the basis whether the size of the media content indicated by the session initiation request is smaller than the idle space of its own memory, and/or according to the user's decision, and/or determining whether to accept the media content according to the configuration in the user equipment.

Preferably, the processing of the IPTV Media Functions transmitting the media content to the user equipment using the reserved resource specifically can include: the IPTV Media Functions initiatively uploads the media content into the user equipment, or the user equipment downloads the media content from the IPTV Media Functions.

Preferably, after step S30, the method can further include: the user equipment selects the media content stored in the memory directly to play; or the user equipment and the Service Selection Functions interactively select the corresponding media content stored in the memory to play.

### System Embodiments

In the embodiments of the present invention, an interactive IPTV system based on the Next Generation Network is further provided.

The interactive IPTV system based on the Next Generation Network according to the present embodiments mainly can comprise:

IPTV Service Control Functions, configured to request to transmit the media content in the IPTV Media Functions to the user equipment;

IPTV Media Functions, configured to transmit the media content to the user equipment; and

User equipment, configured to store the media content into its own memory; to select the media content stored in the memory directly to play, or, to interactively select, with the Service Selection Functions, the corresponding media content stored in the memory to play.

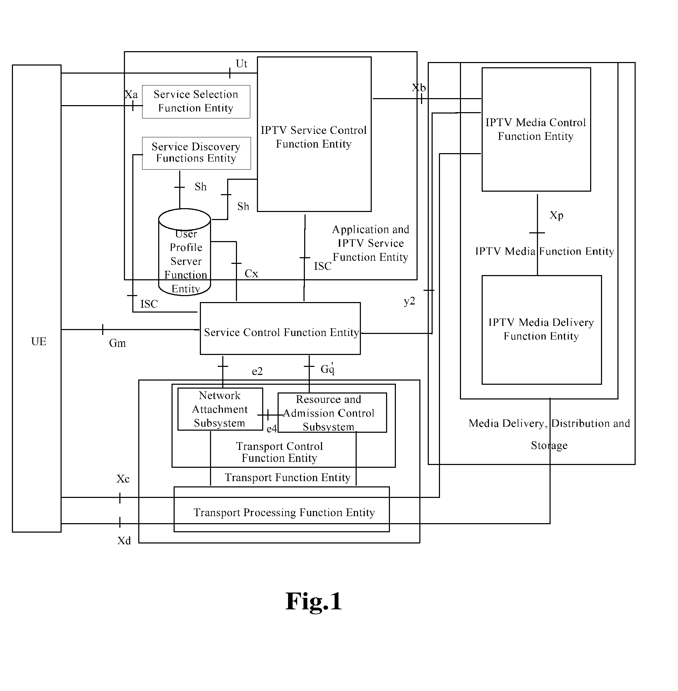

Figure 1 shows the structure block diagram of the IPTV system based on the Next Generation Network according to the embodiments of the present invention. The system shown in Figure 1 mainly comprises the following entities: user equipment, a transport function entity, a service control function entity (if the Next Generation Network uses IMS, the service control function entity is Core IMS), an IPTV Service Control Functions, a User Profile Server Functions, an IPTV Media Functions, a Service Selection Functions and a Service Discovery Functions.

Next, the functions and structures of the above entities will be described in detail.

The transport function entity comprises: a transport control function entity comprising a Network Attachment Subsystem (NASS for short) and a Resource and Admission Control Subsystem (RACS for short); a Transport Processing Functions.

The IPTV Media Functions comprises: an IPTV Media Control Function (IPTV MCF for short) and an IPTV Media Delivery Function (IPTV MDF for short).

Preferably, the IPTV Service Control Functions is connected to the user equipment by the Ut interface.

Preferably, the service control function entity is connected to UE by the Gm interface, connected to the Network Attachment Subsystem NASS by the e2 interface, and connected to the Resource and Admission Control Subsystem by the Gq interface.

Preferably, IPTV MCF is connected to UE by the Xc interface.

Preferably, IPTV MDF is connected to UE by the Xd interface.

Preferably, IPTV MCF is connected to the IPTV Service Control Functions by the Xb interface.

Each module in the apparatus mentioned above is specifically explained as follow:

The User Equipment (UE for short) can be a cellphone having mobile capability; and also can be the Set Top Box in the fixed network or a software terminal realizing the Set Top Box function entity on the basis of software, and also includes the function entities such as home gateway. This user terminal equipment can interact with the user to watch such as on-demand, living IPTV services. Meanwhile, the terminal equipment in the text must have the memory capacity.

The Service control function entity is an aggregation of the main function entities in the service control level in the Next Generation Network (NGN for short) to mainly complete the basic function entities such as session control, service authorization, authentication, charging. In the IMS network situation, it is corresponding to the Core IMS.

The Core IP Multimedia Subsystem (Core IMS for short) module is corresponding to the aggregation of the main function entities (i.e. the service control function entity) in the service control level in the NGN network and mainly comprises the core modules such as P-CSCF/I-CSCF/S-CSCF core call session control. This function entity provides the SIP-based session control mechanism, provides the authorization, authentication of the IPTV terminal user, and requests the Resource and Admission Control (RACS) function entity to allocate the resources. This module also performs the SIP session interactively with the IPTV terminal, IPTV application function entity and the content distribution function entity, and completes the function entities such as security, QoS, charging and roaming.

The IPTV Service Control Functions entity provides the service authentication when the session is started or modified, which includes checking information of the user, examining whether the user can use the selected contents legally; credit restriction and credit control; selecting one IPTV MCF to provide services in cases where there are a plurality of IPTV MCFs. This function entity mainly targets to the on-demand, living, video recording, time shift IPTV services, etc. And this module is an SIP application server in the situation of IMS network.

The User Profile Server Functions (UPSF for short) includes the information of the user data providing the IPTV services.

The IPTV Media Functions (MF for short) includes the IPTV Media Control Function and the IPTV Media Delivery Function which are described as follow.

The IPTV Media Control Function (IPTV MCF for short) mainly comprises the following function entities:
Controlling the media stream of MDF;
Managing the media processing of MDF;
Monitoring the state of MDF;
Managing the interworking (such as trick mode command) with the terminal;
Processing the interworking with the IPTV Service Control Functions SCF;
Precisely monitoring the content distribution and state related to different MDFs controlled by this function entity;
Selecting the MDF to provide the services according to a certain policy when one MCF controls a plurality of MDFs;
Selecting the MF function entity to return the selected result to SCF and to return the re-directed session to the selected MF function entity (for instance, when the requested content is load-balanced in this MF function entity or between MFs);
Generating the charging information, such as charging based on the terminal user watching the contents.

The IPTV Media Delivery Functions (IPTV MDF for short) mainly comprises the following function entities:
Processing the delivery of the media stream (delivering the media services to UE), which may be in the mode of RTP stream, and also supporting to download the content into UE;
Providing the state report to MCF (such as reporting the established IPTV media stream);
Storing the media (such as the content on demand), and possible storing some information related to the media services of the IPTV services;

In particular situation, possibly being used to store the content usually visited or contents related to the user (such as PVR, time shift, living service of trick mode, contents generated by the user, etc.) when the same task is not completed by the terminal;

Additionally processing, encoding or decoding (if necessary) the media to different media formats required (for instance, the resolving power of the TV system relies on the terminal capacity or the user parameter selection) (optionally);
Completing the content protection function entity (such as content encryption) (optionally);
Supporting acquisition of the IPTV media content (optionally);

This function entity acting as the multicast source of the living media stream for the living services (optionally);
Controlling the content distribution between MDFs.

Transport Processing Functions represents the network access connection and the IP core function entity, and is responsible for transmission of the data in the precondition of ensuring the QoS.

Resource and Admission Control Subsystem (RACS for short) module is the RACS assembly in the NGN network. This module completes the resource control request from the Core IMS module, determines the usable resource transmitted, interworks with the bearer layer to complete the bandwidth reservation, distribution, packet filtering, network address and port translation and other function entities.

Network Attachment Subsystem (NASS for short) modules is the NASS assembly in the NGN network, providing registration of the access level and the initialization work of the user terminal accessing the NGN service, providing the authorization, authentication of the transmission layer, and managing the IP address space of the access network and other function entities.

Service Selection Functions (SSF for short) provides the service selection information, such as the list of the services that can be visited by the terminal.

Service Discovery Functions (SDF for short) provides the service attachment information or individualized service discoveries.

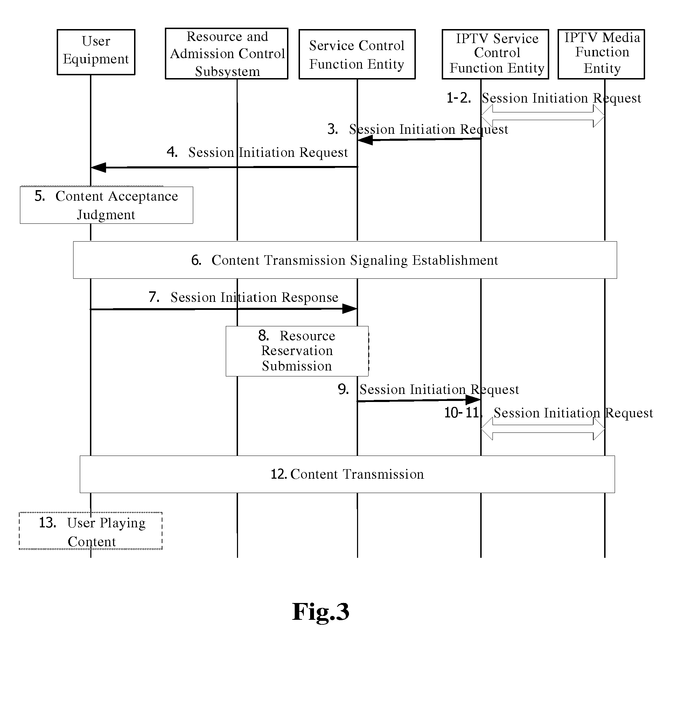

Figure 3 is a message flow chart of the content pushing method according to embodiment 1 of the present invention. As shown in Figure 3, the following steps specifically can be included:
Step 1: the IPTV Service Control Functions selects the IPTV Media Functions according to the information of the identifier to be recommended to the user equipment and initiates the session initiation request to the selected IPTV Media Functions. The selection also can be based on the location information of the user. The media function entity containing the content near to the user equipment as much as possible is selected. The content to be recommended to the user equipment herein is the result analyzed and calculated according to the favorite information of the content selected by the user equipment;
Step 2: the IPTV Media Functions sends the response message of receiving the session initiation request to the IPTV Service Control Functions, denoting that the request message from the IPTV Service Control Functions is received. This response message also may return the information whether the media file is present or not;
Step 3: if the response message returned contains the message returning absence of the media file, the method is ended; if the response message returned contains the message returning presence of the media file or does not contain the message whether the media file is present or not, the following performance is made: the IPTV Service Control Functions sends the session initiation request to the service control function entity, the request containing the URL address information of the recommended content, i.e. the IP address and port number of the recommended content contained by the selected media function entity, and also containing the unique identity information list of the user equipment, possibly one or more.
Step 4: the service control function entity sends the session initiation request to respective user equipment according to the user equipment list information;
Step 5: the user equipment receiving the request selects whether to accept the media file according to the information of the size of the media file or/and the user's initiative decision. If the size of the media file exceeds the memory capacity of the user equipment (such as the Set Top Box); or if the user refuses to accept the media file (the user can configure whether to accept the media file or not according to a certain rule, or the user initiatively selects to accept the media file or not), step 7 is performed directly; otherwise, the following step is performed;
Step 6: the IPTV Media Functions and the user equipment establish the content transmission signaling therebetween. The main purpose of establishing this content transmission signaling is to perform the resource reservation to ensure the service quality of the content transmission, and to make confirmation with the IPTV Media Functions. The basis for ensuring the service quality includes the information transferring the size of the media file, size of the code stream, etc. The content transmission can be in the upload manner, i.e. the media function entity initiatively uploads the content into the user equipment, and also can be in the download manner, i.e. the user equipment function entity initiatively downloads the content from the media function entity;
Step 7: the user equipment receiving the request forwards the session initiation response message to the service control function entity. If it is a response message refusing to accept the media content, step 9 is performed; and if it is a response message approving to accept the media content, the success message is returned and the following step is performed;
Step 8: the service control function entity (P-CSCF corresponding to Core IMS in IMS) and the Resource and Admission Control Subsystem deliver all the resource information reserved before the submission;
Step 9, the service control function entity sends the session initiation response message to the IPTV Service Control Functions;
Step 10, the IPTV Service Control Functions sends the session initiation response message to the IPTV Media Functions;
Step 11: the IPTV Media Functions sends the confirmation message whether the IPTV Media Functions and the user equipment successfully establish the content transmission signaling therebetween to the IPTV Service Control Functions; if successful, the following step is performed; otherwise, exit, and the method is ended;
Step 12: the IPTV Media Functions transmits the recommended content to the user equipment. The content transmission can be in the upload manner, i.e. the media function entity initiatively uploads the content into the user equipment, and also can be in the download manner, i.e. the user equipment function entity initiatively downloads the content from the media function entity;
Step 13: the user equipment plays the content. The content can be played in the manner that the user directly orders the content stored in the user equipment or that the user and the Service Selection Functions interactively select the corresponding content stored in the user equipment.

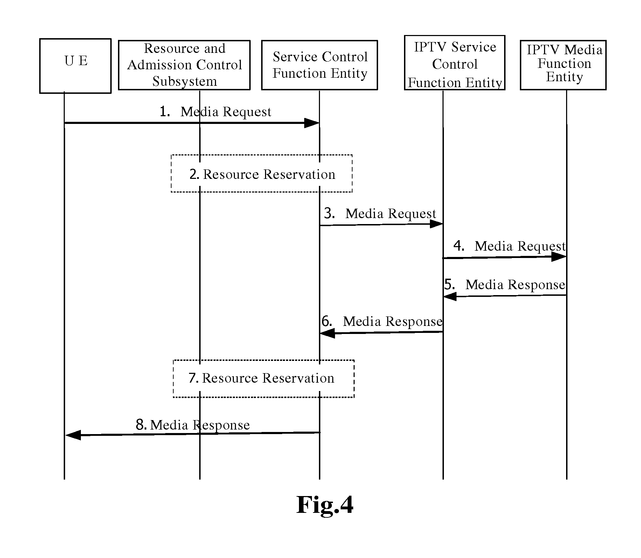

Preferably, step 6 in embodiment 1 is performed after UE initiates the media request. Figure 4 is a message flow chart of the method according to this preferred embodiment. As shown in Figure 4, the following steps specifically can be included:
Step 1: the user equipment sends the media transmission request to the service control function entity, the request including the establishment of the media content transmission (content upload or content download) signaling;
Step 2: the service control function entity and the Resource and Admission Control Subsystem perform the resource reservation therebetween;
Step 3: the service control function entity initiates the media transmission request to the IPTV Service Control Functions;
Step 4: the IPTV Service Control Functions sends the media transmission request to the IPTV Media Functions;
Step 5: the IPTV Media Functions initiates the media transmission response to the IPTV Service Control Functions to return the information including the content transmission signaling establishment;
Step 6: the IPTV Service Control Functions sends the media transmission response to the service control function entity;
Step 7: the service control function entity and the Resource and Admission Control Subsystem update the resource reservation therebetween (optionally);
Step 8: the service control function entity returns the media transmission response to the user equipment, and the content transmission signaling is established.

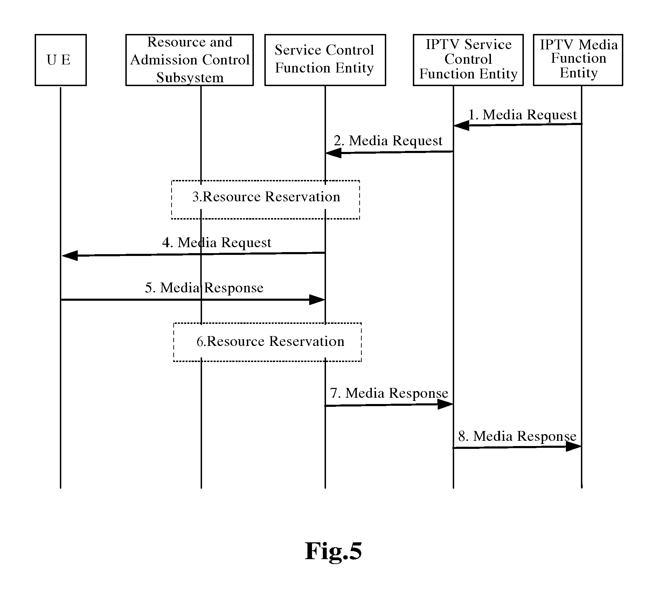

Preferably, step 6 is performed after MF initiates the media request. Figure 5 is a message flow chart of the method according to this preferred embodiment. As shown in Figure 5, the following steps specifically can be included:
Step 1: the IPTV Service Control Functions receives the media transmission request sent from the IPTV Media Functions, the media transmission request including the establishment of the media content transmission (content upload or content download) path;
Step 2: the IPTV Service Control Functions initiates the media transmission request to the service control function entity;
Step 3: the service control function entity and the Resource and Admission Control Subsystem perform the resource reservation therebetween;
Step 4: the service control function entity initiates the media transmission request to the user equipment;
Step 5: the user equipment sends the media transmission response to the service control function entity;
Step 6: the service control function entity and the Resource and Admission Control Subsystem update the resource reservation therebetween (optionally);
Step 7: the service control function entity initiates the media transmission response to the IPTV Service Control Functions to return the information including the content transmission signaling establishment result;
Step 8: the IPTV Service Control Functions sends the media transmission response to the IPTV Media Functions, and the media content transmission signaling is established.

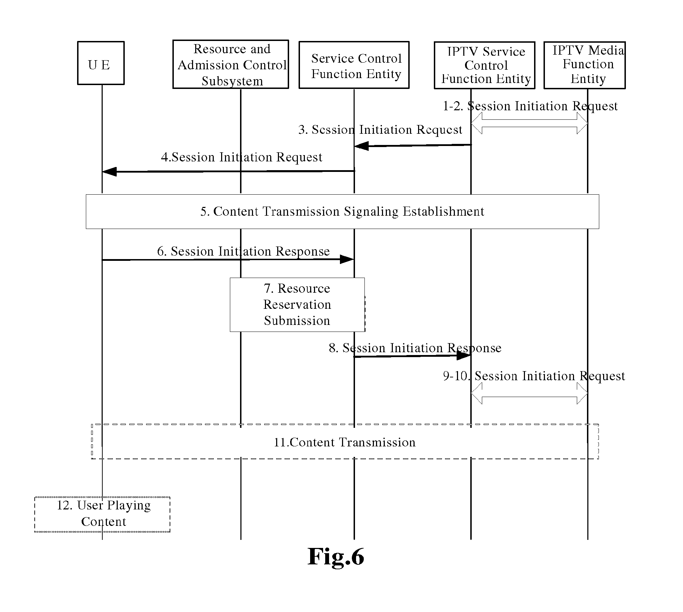

Figure 6 is a message flow chart of the content pushing method according to embodiment 2 of the present invention. As shown in Figure 6, the following steps specifically can be included:
Step 1: the IPTV Service Control Functions selects the IPTV Media Functions according to the information of the identifier to be recommended to the user equipment and initiates the session initiation request to the selected IPTV Media Functions. The selection also can be based on the location information of the user. The media function entity containing the content near to the user equipment as much as possible is selected. The content to be recommended to the user equipment herein is the result analyzed and calculated according to the favorite information of the content selected by the user equipment;
Step 2: the IPTV Media Functions sends the response message of receiving the session initiation request to the IPTV Service Control Functions, denoting that the request message from the IPTV Service Control Functions is received. This response message also may return the information whether the media file is present or not;
Step 3: if the response message returned contains the message returning absence of the media file, the method is ended; if the response message returned contains the message returning presence of the media file or does not contain the message whether the media file is present or not, the following performance is made: the IPTV Service Control Functions sends the session initiation request to the service control function entity, the request containing the URL address information of the recommended content, i.e. the IP address and port number of the recommended content contained by the selected media function entity, and also containing the unique identity information list of the user equipment, possibly one or more.
Step 4: the service control function entity sends the session initiation request to respective user equipment according to the user equipment list information;
Step 5: the IPTV Media Functions and the user equipment establish the content transmission signaling therebetween. The main purpose of establishing this content transmission signaling is to perform the resource reservation to ensure the service quality of the content transmission, and to make confirmation with the IPTV Media Functions. The basis for ensuring the service quality includes the information transferring the size of the transmitted media file, size of the code stream, etc. The content transmission can be in the upload manner, i.e. the media function entity initiatively uploads the content into the user equipment, and also can be in the download manner, i.e. the user equipment function entity initiatively downloads the content from the media function entity;
Step 6: if the content transmission signaling is successfully established in step 5, the user equipment receiving the request sends the response message that the session initiation confirms to accept the media content to the service control function entity, the following step is performed; otherwise, the response message refusing to accept the media content is sent to enter step 8;
Step 7: the service control function entity (P-CSCF corresponding to Core IMS in IMS) and the Resource and Admission Control Subsystem deliver all the resource information reserved before the submission;
Step 8, the service control function entity sends the response message that the session initiation confirms to accept the media content or refuses to accept the media content to the IPTV Service Control Functions;
Step 9: the IPTV Service Control Functions forwards the session initiation response message to the IPTV Media Functions;
Step 10: the IPTV Media Functions sends the confirmation message that the IPTV Media Functions and the user equipment establish the content transmission signaling therebetween to the IPTV Service Control Functions;
Step 11: if the IPTV Media Functions receives the response message confirming to accept the media content from the IPTV Service Control Functions, the IPTV Media Functions transmits the recommended content to the user equipment. The content transmission can be in the upload manner, i.e. the media function entity initiatively uploads the content into the user equipment, and also can be in the download manner, i.e. the user equipment function entity initiatively downloads the content from the media function entity, and the following step is performed; otherwise, exit;
Step 12: the user equipment plays the content. The content can be played in the manner that the user directly orders the content stored in the user equipment or that the user and the Service Selection Functions interactively select the corresponding content stored in the user equipment.

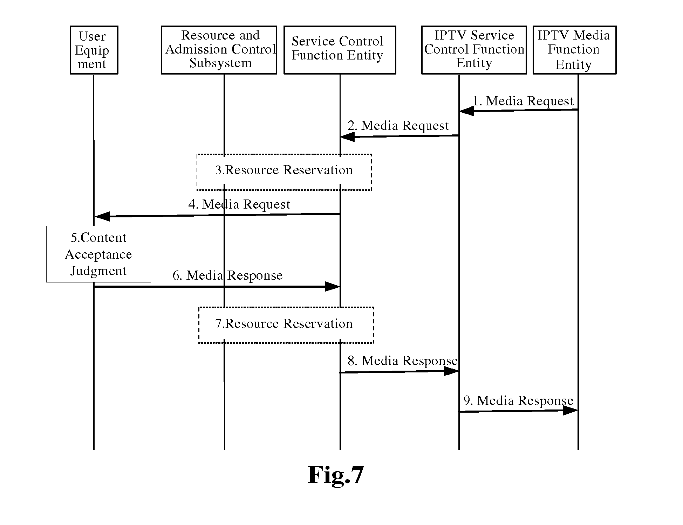

Preferably, step 5 in the above embodiment 2 is performed after MF initiates the media request. Figure 7 is the message flow chart of the method according to this preferred embodiment. As shown in Figure 7, the following steps specifically can be included:
Step 1: the IPTV Service Control Functions receives the media transmission request sent from the IPTV Media Functions, the media transmission request including the establishment of the media content transmission (content upload or content download) path;
Step 2: the IPTV Service Control Functions initiates the media transmission request to the service control function entity;
Step 3: the service control function entity and the Resource and Admission Control Subsystem perform the resource reservation therebetween;
Step 4: the service control function entity initiates the media transmission request to the user equipment;
Step 5: the user equipment receiving the request selects whether to accept the media file according to the information of the size of the media file or/and the user's initiative decision. If the size of the media file exceeds the memory capacity of the user equipment (such as the Set Top Box); or if the user refuses to accept the media file (the user can configure whether to accept the media file or not according to a certain rule, or the user initiatively selects to accept the media file or not);
Step 6: the user equipment sends the response rejecting the media transmission or accepting the media content to the service control function entity on the basis that the user equipment refuses/accepts the media content;
Step 7: the service control function entity and the Resource and Admission Control Subsystem update the resource reservation therebetween (optionally);
Step 8: the service control function entity forwards the response rejecting the media transmission or accepting the media content to the IPTV Service Control Functions to return the information including the content transmission signaling establishment result;
Step 9: the IPTV Service Control Functions sends the media transmission response to the IPTV Media Functions. If it is the response accepting the media, the media content transmission signaling is established; otherwise, the establishment is failed.

From the above descriptions it can be seen that with the technical solutions in the present invention, the IPTV Service Control Functions requests to transmit the media content in the IPTV Media Functions to the user equipment to be stored by the user equipment, the content pushing service (usually called Push Content on Demand or Push Video on Demand) is realized, i.e. the content in the content distribution network is pushed into the user equipment (usually the Set Top Box) in the real-time or non-realtime manner, therefore, the user can select the content stored in the user equipment directly to watch the TV program that the service provider recommends, which makes it convenient for the operator to flexibly provide diversified services to the user and can effectively enhance the core competitiveness of the IPTV system.

Apparently, the person skilled in the art should know that each module or step in the present invention can be realized by the general calculating apparatus. They can be collected in a single calculating apparatus or distributed in the network formed by a plurality of calculating apparatus. Optionally, they can be realized by the program codes executable by the calculating apparatus, therefore, they can be stored in the storing apparatus to be executed by the calculating apparatus, or they can be fabricated into integrated circuit modules, respectively, or a plurality of modules or steps therein are fabricated into individual integrated circuit module for the accomplishment. Thus, the present invention is not limited to the combination of any particular hardware and software.

The above is merely the preferred embodiments of the present invention and not to limit the present invention. For the person skilled in the art, the present invention may have various alterations and changes. Any modification, equivalent substitution, improvement, etc., within the spirit and principle of the present invention, should be included in the protection scope of the present invention.

## Claims

1. A content pushing method of an interactive IPTV system based on Next Generation Network, **characterized by** including:
an IPTV Service Control Functions requesting to transmit a media content in an IPTV Media Functions to user equipment;
the IPTV Media Functions transmitting the media content to the user equipment; and
the user equipment storing the media content into its own memory.

2. The content pushing method according to Claim 1, **characterized in that** the IPTV Service Control Functions requesting to transmit the media content in the IPTV Media Functions to the user equipment specifically includes:
the IPTV Service Control Functions sending a session initiation request to a service control function entity; and
the service control function entity forwarding the session initiation request to the user equipment.

3. The content pushing method according to Claim 2, **characterized in that** prior to the IPTV Service Control Functions sending the session initiation request carrying the request to the service control function entity, further including:
the IPTV Service Control Functions initiating the session initiation request to a selected IPTV Media Functions; and
after the IPTV Service Control Functions initiating the session initiation request to the selected IPTV Media Functions, further including:
the IPTV Media Functions sending a response message denoting that the session initiation request is received to the IPTV Service Control Functions.

4. The content pushing method according to Claim 1, **characterized in that** a processing of the IPTV Media Functions transmitting the media content to the user equipment specifically includes:
the user equipment performs judgment according memory capability of its memory and/or user's selection and/or whether configuration in the user equipment accepts or not, and result of the judgment is confirming to accept the media content;
the IPTV Media Functions and the user equipment performing the establishment of content transmission signaling therebetween;
the user equipment sending a session initiation response message approving to accept the media content to the service control function entity;
the service control function entity delivering all resource information reserved before submission to Resource and Admission Control Subsystem;
the service control function entity sending the session initiation response message to the IPTV Service Control Functions; and
the IPTV Media Functions transmitting the media content to the user equipment using the resource reserved.

5. The content pushing method according to Claim 4, **characterized in that** the IPTV Media Functions and the user equipment establishing the content transmission signaling therebetween specifically includes:
step ba: the service control function entity receiving a media transmission request sent from the user equipment, the media transmission request including establishment of a media content transmission signaling;
step bb: the service control function entity and the Resource and Admission Control Subsystem performing resource reservation therebetween;
step bc: the service control function entity initiating the media transmission request to the IPTV Service Control Functions;
step bd: the IPTV Service Control Functions sending the media transmission request to the IPTV Media Functions;
step be: the IPTV Media Functions initiating a media transmission response to the IPTV Service Control Functions to return information including a content transmission signaling result;
step bf: the IPTV Service Control Functions sending the media transmission response to the service control function entity; and
step bh: the service control function entity returning the media transmission response to the user equipment, and a process of the content transmission signaling is established.

6. The content pushing method according to Claim 5, **characterized in that** between step bf and step bh, further including the following step:
step bg: the service control function entity and the Resource and Admission Control Subsystem updating the resource reservation therebetween.

7. The content pushing method according to Claim 4, **characterized in that** the IPTV Media Functions and the user equipment establishing a content transmission signaling therebetween specifically includes:
step aa: the IPTV Service Control Functions receiving a media transmission request sent from the IPTV Media Functions, the media transmission request including establishment of a media content transmission signaling process;
step ab: the IPTV Service Control Functions initiating the media transmission request to the service control function entity;
step ac: the service control function entity and the Resource and Admission Control Subsystem performing resource reservation therebetween;
step ad: the service control function entity initiating the media transmission request to the user equipment;
step af: the user equipment sending a media transmission response to the service control function entity;
step ah: the service control function entity initiating the media transmission response to the IPTV Service Control Functions to return information including a content transmission signaling process; and
step ai: the IPTV Service Control Functions sending the media transmission response to the IPTV Media Functions, and the media content transmission signaling process is established.

8. The content pushing method according to Claim 1, **characterized in that** the IPTV Media Functions transmitting the media content to the user equipment specifically includes:
the IPTV Media Functions and the user equipment performing the establishment of content transmission signaling therebetween;
the user equipment sending a session initiation response message approving to accept the media content to the service control function entity;
the service control function entity delivering all resource information reserved before submission to the Resource and Admission Control Subsystem;
the service control function entity sending the session initiation response message to the IPTV Service Control Functions; and
the IPTV Media Functions transmitting the media content to the user equipment using the resource reserved.

9. The content pushing method according to Claim 4 or 8, **characterized by**,
prior to the IPTV Media Functions transmitting the media content to the user equipment using the resource reserved, further including: the IPTV Service Control Functions sending the session initiation response message to the IPTV Media Functions; and
after the IPTV Service Control Functions sending the session initiation response message to the IPTV Media Functions, further including: the IPTV Media Functions sending a confirmation message that the IPTV Media Functions and the user equipment successfully establish the content transmission signaling therebetween to the IPTV Service Control Functions.

10. The content pushing method according to Claim 8, **characterized in that** the IPTV Media Functions and the user equipment establishing the content transmission signaling therebetween specifically includes:
step aa: the IPTV Service Control Functions receiving a media transmission request sent from the IPTV Media Functions, the media transmission request including establishment of a media content transmission signaling process;
step ab: the IPTV Service Control Functions initiating the media transmission request to the service control function entity;
step ac: the service control function entity and the Resource and Admission Control Subsystem performing resource reservation therebetween;
step ad: the service control function entity initiating the media transmission request to the user equipment;
step ae: the user equipment confirming to accept the media content according to memory capacity of its memory and/or user's selection;
step af: the user equipment sending a media transmission response to the service control function entity;
step ah: the service control function entity initiating the media transmission response to the IPTV Service Control Functions to return information including a content transmission path; and
step ai: the IPTV Service Control Functions sending the media transmission response to the IPTV Media Functions, and the media content transmission signaling process is established.

11. The content pushing method according to Claim 7 or 10, **characterized in that** between step af and step ah, further including the following step:
step ag: the service control function entity and the Resource and Admission Control Subsystem updating resource reservation therebetween.

12. The content pushing method according to Claim 4 or 10, **characterized in that**, the user equipment determining whether to accept the media content according to memory capacity of its memory and/or user's selection confirmation and/or configuration in the user equipment specifically includes:
the user equipment confirms whether to accept the media content based on whether size of the media content indicated by the session initiation request is smaller than an idle space of its own memory, and/or according to user's decision, and/or determining whether to accept the media content according to the configuration in the user equipment.

13. The content pushing method according to Claim 4 or 8, **characterized in that** the IPTV Media Functions transmitting the media content to the user equipment using the resource reserved specifically includes:
the IPTV Media Functions initiatively uploading the media content into the user equipment, or the user equipment downloads the media content from the IPTV Media Functions.

14. An interactive IPTV system based on Next Generation Network, **characterized by** comprising:
an IPTV Service Control Functions, configured to request to transmit a media content in an IPTV Media Functions to user equipment;
the IPTV Media Functions, configured to transmit the media content to the user equipment; and
the user equipment, configured to store the media content into its own memory; to select the media content stored in the memory directly to play, or, to interactively select, with a Service Selection Functions, the corresponding media content stored in the memory to play.
